# EUROPEAN PATENT APPLICATION

(11) **EP 1 170 658 A1**
(43) Date of publication of application: **09.01.2002**
(21) Application number: 00305733.8
(22) Date of filing: 07.07.2000
(51) Int. Cl.: G06F 9/44, G06F 9/46

(54) **Window management communications**

(71) Applicant: SUN MICROSYSTEMS, INC., Palo Alto, California 94303 (US)
(72) Inventor: Chenede, Erwann, Dublin 1 (IE)
(74) Representative: Harris, Ian Richard

(57) **Abstract**

An interface is operable to permit direct access between an application and a window manager, where the window manager is responsible for controlling window layout within at least one workspace in accordance with predefined rules. The interface is operable to provide at least one control module for controlling communication between the application and the window manager and at least one repository of data to be communicated between an application and the window manager. Such an interface enables the provision of a flexible and extensible approach to communicating between an application and a window manager. Such an interface can readily be implemented as an extension to a conventional windowing system.

## Description

### BACKGROUND OF THE INVENTION

The invention relates generally to windowing environments for computer systems. The invention finds application in a windowing environment where a graphical server defines windows for display and a windowing manager is operable to control the display of such windows in accordance with window layout rules.

An example of such a windowing environment is the X Windows System (hereinafter referred to simply as "X"). X is a network-oriented windowing system that can operate on a network of systems from one or more vendors. It provides a common platform that enables portable applications to be provided for an entire class of machines, rather than for a single manufacturer's equipment. X does not need to operate over a network, but can also operate on a single machine.

As X is a network-oriented windowing system, it cannot be assumed that an application is going to be running on the same machine that supports a display. While applications can execute locally on the machine supporting the display, other applications can execute on other machines, sending requests across the network to a particular display and can receive keyboard and pointer events from the machine controlling the display.

The program that controls the display in the X-windows system is termed a server. This server program runs on the local machine that controls the display, but is also accessible to applications running on other, remote, machines for controlling the display on the local machine. The server acts as an intermediary between user programs, also termed clients or applications, running on local or remote machines. The server can perform various tasks including, for example:
permitting access to the display by multiple clients;
interpreting network protocol messages from a client;
passing user input to clients by sending network messages;
carrying out graphical drawing tasks; and
maintaining resources to be shared among clients including window
definitions, cursors, fonts, graphics contexts, etc.

Client programs interact with the server, with protocol messages being sent between the clients and the server. Request messages can be sent from the client to the server and event and reply messages can be sent from the server to the client.

An implementation of an X environment can optionally be provided with a window manager that is responsible for the layout of windows within workspaces on the display. A window manager, if provided, is a program that enforces a window layout policy. The layout policy can include a set of rules that specify, for example, allowable sizes and positions for windows and icons. The window manager could also be operable to define multiple virtual desktops, or workspaces on the display, with zero, one or more windows being displayable within each workspace. This is a technique to permit more windows to be displayed, although only the windows on a selected workspace (hereinafter an active workspace) would be visible at any one time, non-selected (non-active) workspaces being obscured by the currently active workspace.

In simple terms, in the X environment, the server is responsible for creating windows, the window manager is responsible for controlling the layout of the windows and the clients are responsible for the content of the windows. The window manager is effectively another client program. However, it has the task of monitoring and trapping event and response messages and controlling the display layout in response thereto in accordance with the layout rules.

As mentioned above, messages are sent from the clients to the server, and vice versa. As a result, the operation of the window manager is not accessible to the clients. This means that in the conventional X environment the amount of information that can be obtained by a client application and/or a user with regard to the actual layout of windows on the display can be limited. For example, it is typically not possible to show the windows displayed on a given workspace that is not the active workspace currently occupying the display without actually switching to that given workspace.

Accordingly, an aim of the present invention is to provide a windowing environment that can enable clients to have access to internal layout information from a window manager and/or to instruct the window manager to modify the window layout in a flexible and extensible manner.

### SUMMARY OF THE INVENTION

Particular and preferred aspects of the invention are set out in the accompanying independent and dependent claims. Combinations of features from the dependent claims may be combined with features of the independent claims as appropriate and not merely as explicitly set out in the claims.

An aspect of the invention provides an interface operable to permit direct access between an application and a window manager, where the window manager is responsible for controlling window layout within at least one workspace in accordance with predefined rules. The interface is operable to provide at least one control module for controlling communication between the application and the window manager and at least one repository of data to be communicated between the application and the window manager.

An interface (or application programmable interface (API)) in accordance with the invention enables the provision of a flexible and extensible approach to communicating between an application and a window manager. An embodiment of the invention can readily be implemented as an extension to a conventional windowing system.

For example, in an embodiment of the invention, a workspace information repository that is associated with the window manager is provided in the interface. The workspace information repository is operable to hold workspace content information to be communicated from the window manager to at least one application. A first query module can then be responsive to a request from an application for information regarding the content of a workspace to query the workspace information repository for workspace content information to be returned to the application. Such a configuration enables an application to receive information output from the window manager about, for example, the content of one or more workspaces.

An embodiment of the invention can include a command request control module responsive to a request from an application for information internal to the window manager to cause the window manager to return the internal information to the application. In this interface, the command request control module can be responsive to a command message from an application to place information representative of a command in a command repository associated with the window manager.

Furthermore, the command request control module can be responsive to a request message requesting data internal to the window manager to place information representative of the request in the request repository associated with the window manager. In this manner, the window manager can be made aware that such a request has been made by means of conventional event handling.

A data request repository associated with an application can be provided for holding an identification of the internal data requested, the request message identifying the location of the data request repository. In this way a large amount of data can be requested by a single request.

A response repository associated with an application can be provided to receive requested items supplied by the window manager in response to a request message. The request message can be arranged to identify the location of the response request repository.

An event notification repository associated with an application can be provided to receive a notification of an event from the window manager and an event control module can be provided for managing event notification requests between an application and the window manager. An event request repository associated with the application can be provided for receiving an identification of events requested by application. The event control module can be responsive to an event notification request message from an application to identify this to the window manager. The window manager can be operable to poll the event request repository to identify event notifications requested by an application.

In an embodiment of the invention, at least one repository can be configured as or using a dummy window. In some examples, information can be held as properties of the dummy window. A dummy window is a window that is not mapped to a screen location and is therefore not displayed. Configuring a repository as a dummy window associated with the window manager or an application means that the data in the repository is accessible readily by conventional event handling procedures to the window manager or application with which it is associated.

In a particular embodiment of the invention, one dummy window is provided that is associated with the window manager and one dummy window is provided that is associated with an application and at least one repository is configured as a set of properties of an appropriate one of the dummy windows.

In a preferred embodiment of the invention, an interface program element is formed by program code forming an interface as described above. The interface program element can be provided on a carrier medium, for example a storage or a transmission medium.

Another aspect of the invention provides a graphical subsystem for displaying a window for at least one application, the graphical subsystem comprising a window manager operable to control window layout within at least one workspace in accordance with predefined rules and an interface as described above.

A further aspect of the invention provides a computer system comprising a processor, memory, at least one display and a graphical subsystem as defined above.

Another aspect of the invention provides a method of providing direct access between an application and a window manager, which window manager is responsible for controlling window layout within at least one workspace in accordance with predefined rules, the method comprising controlling communication between the application and the window manager by means of an interface and holding data transferred in communication between the application and window manager in a repository of data in the interface.

### BRIEF DESCRIPTION OF THE DRAWINGS

Exemplary embodiments of the present invention will be described hereinafter, by way of example only, with reference to the accompanying drawings in which like reference signs relate to like elements and in which:
Figure 1 is a schematic representation of a computer workstation;
Figure 2 is a schematic representation of a configuration of such a workstation;
Figure 3 is a schematic representation of a network environment;
Figure 4 is a schematic representation of multiple workspaces;
Figure 5 is an overview of the relationship of a window manager to client applications in a conventional window system;
Figure 6 is a logical diagram illustrating the functional operation of a window manager;
Figure 7 is an overview of the relationship of a window manager to client applications in an embodiment of the invention;
Figure 8 is an alternative representation of part of Figure 7;
Figure 9 is a schematic representation of Figure 8 in more detail;
Figures 10a and 10b illustrate message formats;
Figure 11 is a schematic representation of a dummy window;
Figures 12A and 12B are a schematic block diagram and a flow diagram, respectively, illustrating a first mode of operation of an embodiment of the invention;
Figures 13A and 13B are a schematic block diagram and a flow diagram, respectively, illustrating a second mode of operation of an embodiment of the invention;
Figures 14A and 14B are a schematic block diagram and a flow diagram, respectively, illustrating a third mode of operation of an embodiment of the invention;
Figures 15A and 15B are a schematic block diagram and a flow diagram, respectively, illustrating a fourth mode of operation of an embodiment of the invention;
Figures 16A and 16B are a schematic block diagram and a flow diagram, respectively, illustrating a fifth mode of operation of an embodiment of the invention;
Figure 17 is a representation a window of a first application that makes use of an embodiment of the invention; and
Figure 18 is a representation a window of a second application that makes use of an embodiment of the invention.

### DESCRIPTION OF PARTICULAR EMBODIMENTS

Exemplary embodiments of the present invention are described in the following with reference to the accompanying drawings.

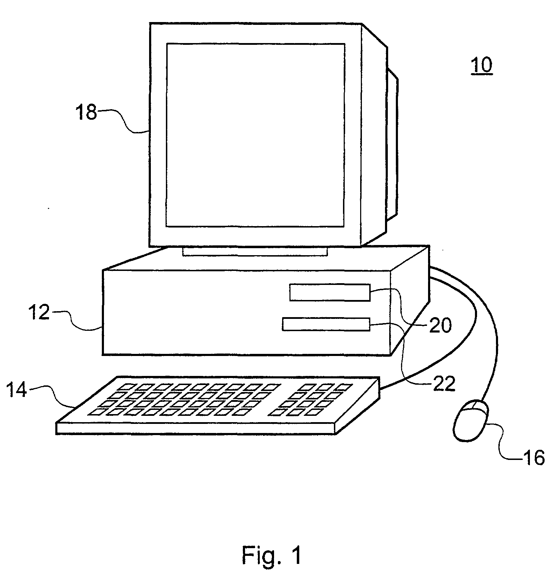

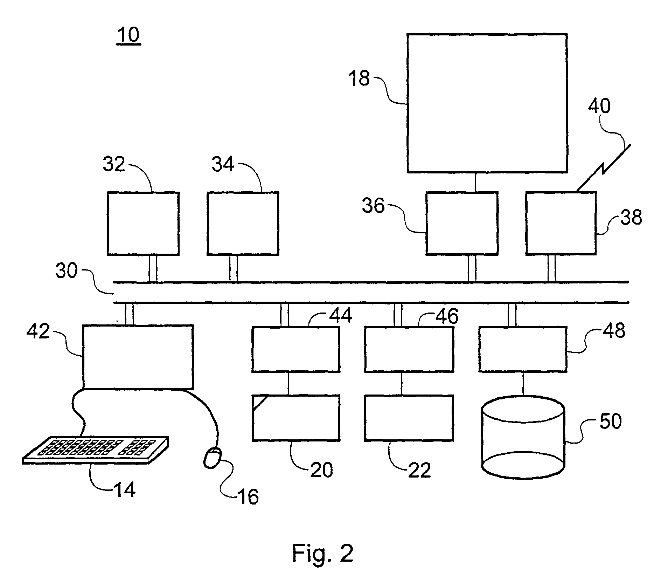

Figure 1 is a schematic representation of a computer workstation on which an exemplary embodiment of the invention is implemented. As shown in Figure 1, a computer workstation 10 includes a system unit 12 that includes a processor, memory, etc (see Figure 2), user input devices, for example in the form of a keyboard 14 and a pointing device (e.g., a mouse) 16, and a display 18. Removable media devices in the form, for example, of a floppy disk drive 20 and an optical and/or magneto-optical drive (e.g. a CD, a DVD ROM, a CDR drive) 22, can also be provided.

Figure 2 is schematic block diagram illustrating an exemplary configuration of a computer workstation 10 as shown in Figure 1.

As shown in Figure 2, the computer workstation 10 includes a bus 30 to which a number of units are connected. A microprocessor (CPU) 32 is connected to the bus 30. Main memory 34 for holding computer programs and data is also connected to the bus 30 and is accessible to the processor. A display adapter 36 connects the display 18 to the bus 30. A communications interface 38, for example a network interface and/or a telephonic interface such as a modem, ISDN or optical interface, enables the computer workstation 10 to be connected 40 to other computers via, for example, an intranet or the Internet. An input device interface 42 connects one or more input devices, for example the keyboard 14 and the mouse 16, to the bus 30. A floppy drive interface 44 provides access to the floppy disk drive 20. An optical drive interface 46 provides access to the optical or magneto-optical drive 22. A storage interface 48 enables access to a hard disk 50. Further interfaces, not shown, for example for connection of a printer (not shown), may also be provided. Indeed, it will be appreciated that one or more of the components illustrated in Figure 2 may be omitted and/or additional components may be provided, as required for a particular implementation.

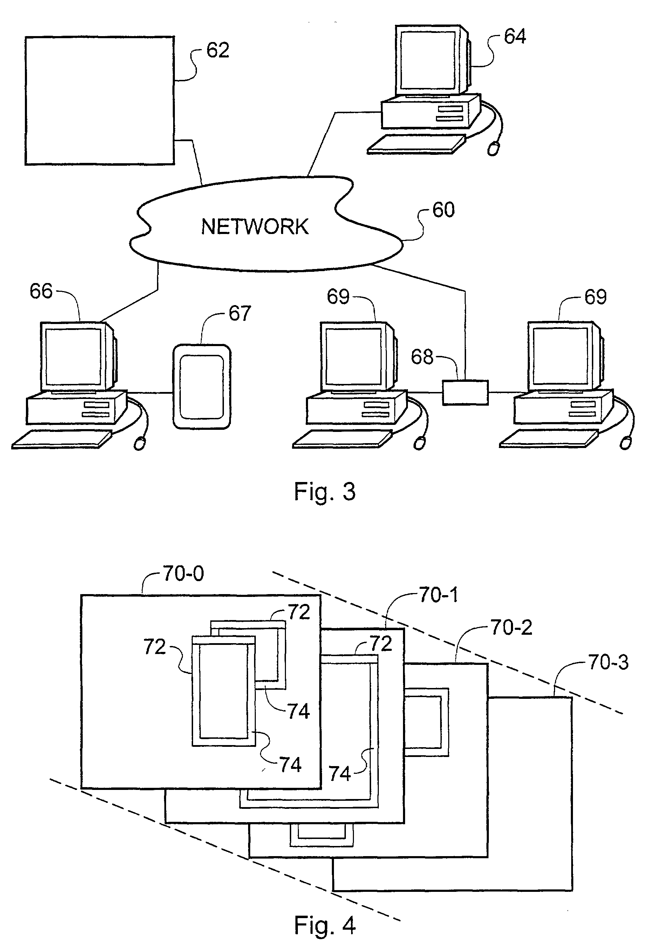

In the following, an example of the present invention will be described in the context of an X window environment. This is only one particular embodiment of the present invention, and it will be understood that the invention could be implemented in other windowing systems. As mentioned in the introduction, X is a network-oriented windowing system. Consequently, an application need not be running on the same system that actually supports the display. Figure 3 illustrates an example of a possible environment in which X may be operating. As shown in Figure 3, a number of computer stations are connected via a network 60. The computer stations could include a mainframe computer 62, a workstation 64 as shown in Figure 1, a workstation 66 similar to that shown in Figure 1, but also provided with a supplementary display 67, or a computer system with a computer 68 supporting one or more terminals 69. These are merely possible configurations of a system within which X could be operating. As suggested by the computer station 66 with the supplementary display 67, X is not limited to a single screen but enables multiple screens to be supported at a given workstation. Moreover, as illustrated in Figure 4, X also supports multiple workspaces 70 (also known as virtual desktops) operating on one or more screens. Each of the workspaces 70 (e.g. 70-0, 70-1, 70-2, 70-3) can contain zero, one or more windows.

Bearing in mind the flexibility and the number of different display configurations possible within the network-oriented windowing system, X provides a program that is termed a server for controlling each display. The server acts as an intermediary between user programs (called clients or applications) running either on a local system, or a system remote to the system supporting the display and comprising the server.

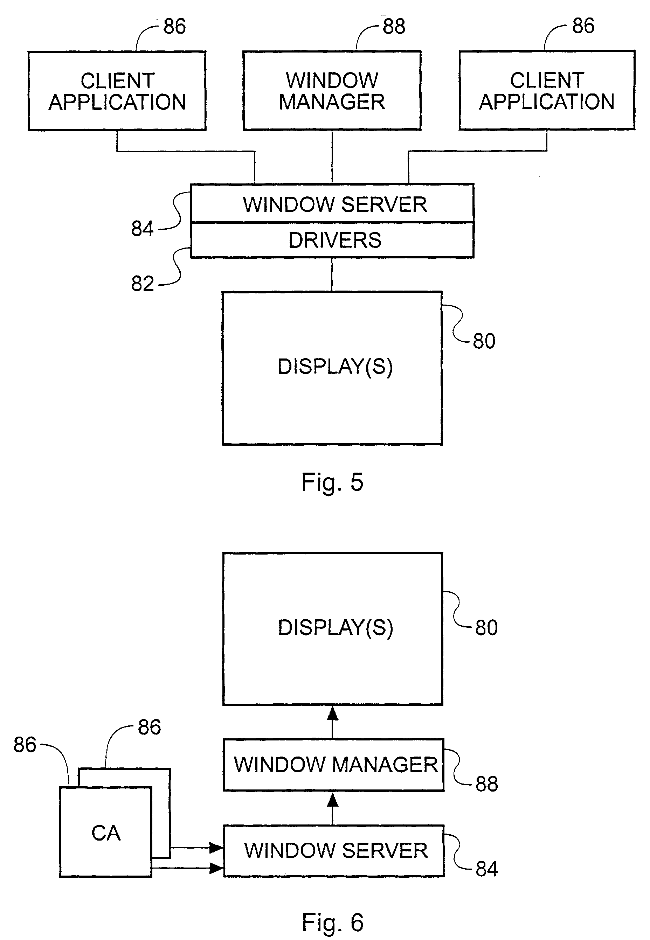

Figure 5 is an overview of the relationship of the server in an X system to client applications and the display. As shown in Figure 5, the server 84 operates on an operating system including display drivers 82 that support one or more displays 80. A number of client applications 86 communicate with the server 84. The server enables access to the display by multiple clients. It interprets network display messages from the clients and it passes user input to the clients by sending network display messages. It also performs graphical operations on the display. It further managers various data structures including windows, cursors, fonts and graphics context as resources that can be shared between clients and are referred to by resource identifiers (IDs).

Figure 5 also shows a window manager 88. The window manager is a program that forms another client to the server 84. However, the window manager 88 is given special authority to control the layout of windows on the display(s) 80. The window manager typically allows the user to move or resize windows, start applications and control the stacking of windows on the screen, but only in accordance with a set of rules forming a window manager window layout policy. In a conventional system, as illustrated in Figure 5, the client applications are not, however, able to communicate directly with the window manager 88. Instead, the client applications communicate with the server 84.

Figure 6 is a logical diagram illustrating the functional operation of the window manager 88 with respect to the server 84 and the client applications 86. Thus, as represented in Figure 6, the client applications 86 make requests to the X server 84, which in turn issues display commands for controlling the display 80. However, the window manager 88 acts as a filter between the server 84 and the display(s) 80 by enforcing the layout policy rules to control the display of the windows. Thus, for example, the window manager may only accept certain sizes and positions for the display of a particular window and, if it were to detect commands from the server 84 for the display of a window of another size, it could block the display of that window.

A disadvantage with the arrangement illustrated in Figure 5, whereby the client applications communicate directly with the server 84, and cannot communicate with the window manager, is that information controlled by the window manager is not readily accessible to the client applications 86. Thus, for example, where multiple workspaces are generated as represented, for example, in Figure 4, the user will only be aware of the workspace currently selected for display, (say workspace 70-0). In such a situation, the workspaces 70-1, 70-2 and 70-3 will not be visible to the user, and the user will not be aware of the content of those workspaces, unless a positive switch is made to exchange the currently active workspace so that one of the other workspaces 70-1, 70-2, 70-3 is selected as the active workspace, whereby the workspace 70-0 will then no longer be visible.

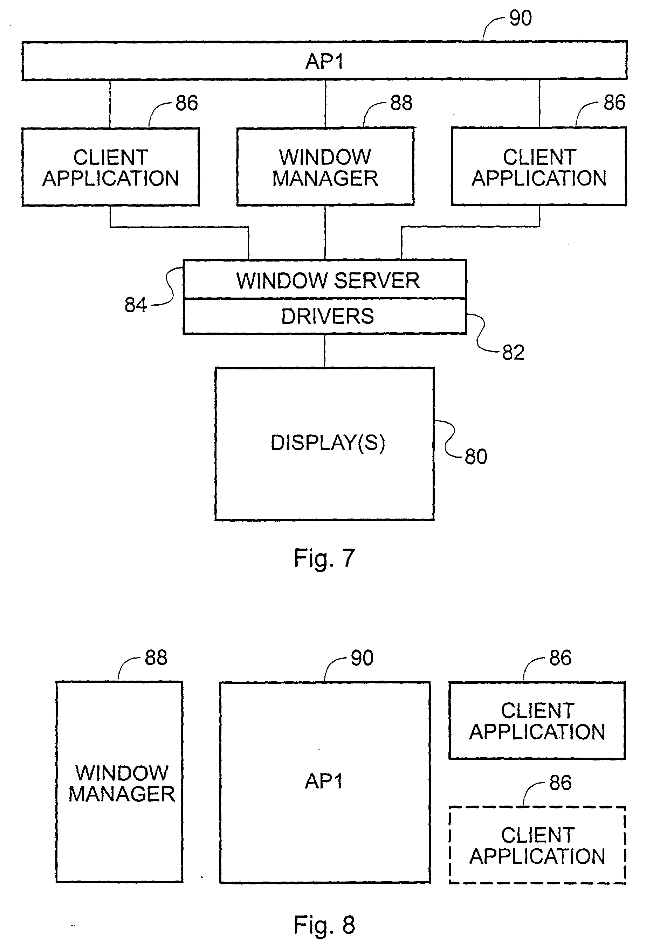

Figure 7 illustrates an embodiment of the present invention, whereby an additional API 90 is provided that enables client applications 86 to communicate directly with the window manager 88 and to exchange information with the window manager 88. The basic structure shown in Figure 5 is maintained, and the normal operation of the X system continues for the conventional display of windows generated by the client applications. The API 90 is in addition to the conventional structure.

Figure 8 turns part of Figure 7 on its side and gives an indication of a representation of the relative components that will be used in the following Figures, to enable the interrelationship between Figure 7 and the later Figures to be understood. Thus, the API 90 is shown between the window manager 88 and one or more client applications 86. In the following Figures, for ease of representation, only one client application will be shown. However, it should be understood that in practice there will typically be multiple client applications with the API providing a link between the window manager and each of those client applications.

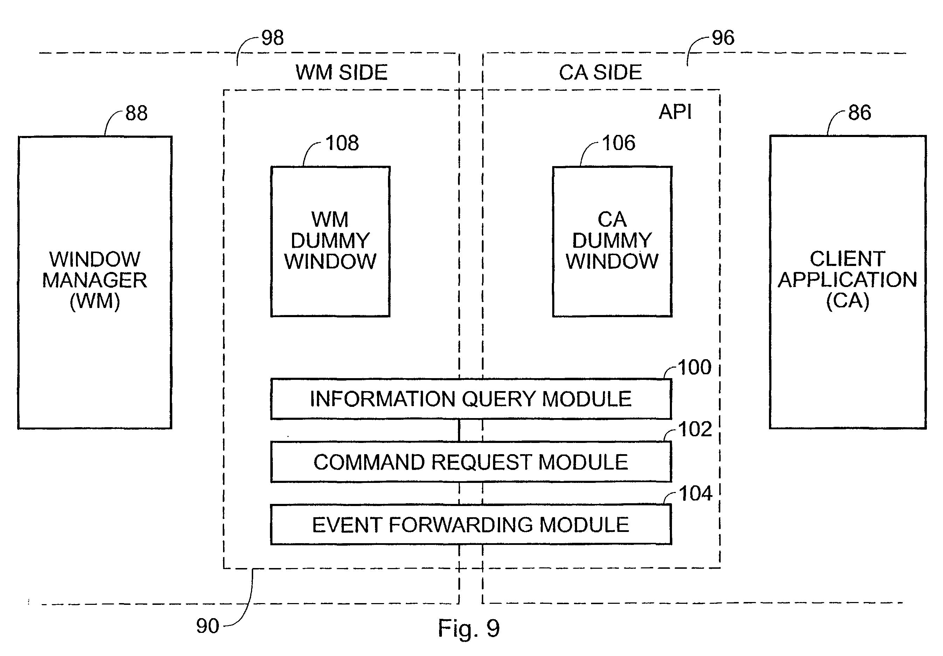

Figure 9 illustrates the API 90 in more detail. As shown in Figure 9, the API 90 provides a window manager (WM) side 98 and a client application (CA) side 96. This embodiment of the invention provides an information query module 100, a command request module 102 and an event forwarding module 104. The information query module enables the window manager 88 to broadcast predetermined functions that relate to the workspaces supported by the window manager to any client application. The command request module 102 provides a mechanism whereby the client applications can directly instruct the window manager 88 to perform tasks (as opposed to the prior art situation where such requests had to be made via the server 84). It also provides a client application 86 with a possibility to request information internal to the window manager 88. The event forwarding module 104 enables a client application to register an interest in changes to selective parameters, whereby the window manager is then operable, when such changes occur, to inform the client application of these changes. The various modules 100, 102 and 104 can be implemented as respective software program elements including computer code that can be stored, for example, in the memory of the computer system that supports the display and is operable to control the processor thereof. Alternatively, the computer code could be distributed across a distributed system.

The various modules 100, 102 and 104 create and support dummy windows for the exchange of information via the API 90 for transferring information in respective directions between the window manager 88 and the client application(s) 86. The dummy windows will typically be generated and held in the memory of the computer system that supports the window manger or client application with which a dummy window is associated. As shown in Figure 9, a WM dummy window 108 associated with the window manager 88 is defined on the WM side 98 of the API 90 and a CA dummy window 106 associated with the client application is defined on the CA side 96 of the API 90. The WM side 98 and the CA side 96 of the API with the respective dummy windows could be defined in a single machine or in different machines depending on the relative locations of the window manager and the client application concerned.

A dummy window is a window that is unmapped. In other words, a dummy window has the same characteristics as a normal window, except that it has no mapping to the display, and is therefore not displayed. Accordingly, it provides a repository for information that is operable using conventional window commands and operations. The repository could be thought of as the dummy window itself, or alternatively as the properties of that dummy window, the latter being the actual location where the information is held. Information held in the properties of the dummy window is readily and automatically accessible to an associated client as a result of conventional event handling processes within an X environment.

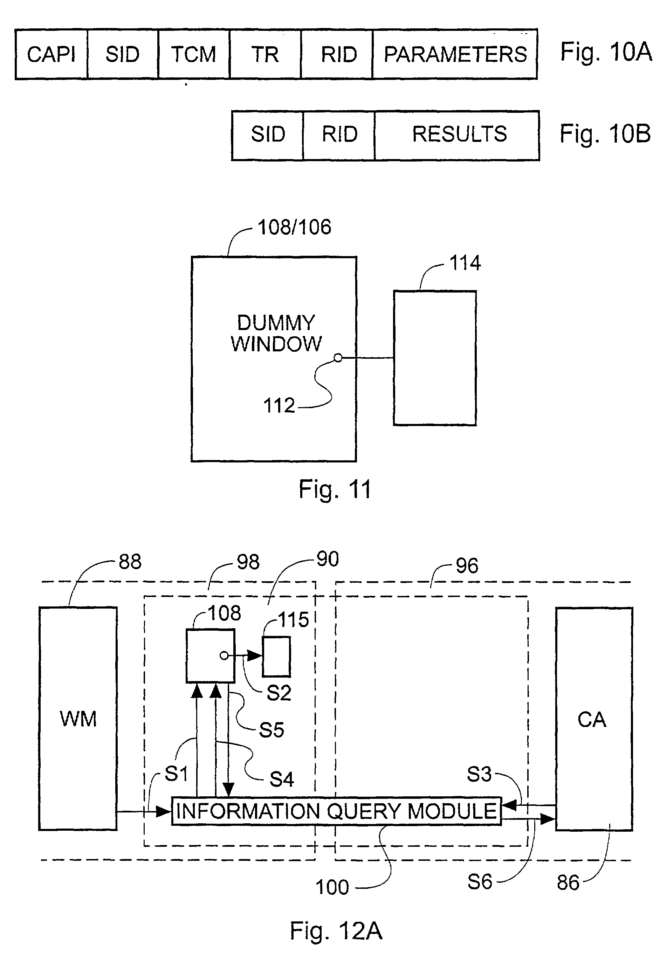

To communicate between the client applications 86 and the window manager 88, the present embodiment of the invention uses a messaging protocol in the various modules 100, 102 and 104 that includes client messages having the format shown in Figure 10a, although of course other formats are possible. Thus, a client request message can include a client API identifier (CAPI) identifying the message as a client API message, a sender ID (SID) identifying the client issuing the request, a type of client message identifier (TCM) identifying the type of client message, a type of request identifier (TR), a recipient ID (RID) identifying the recipient and a parameters field (PARAMETERS). In a short message format, the parameters could be actual parameters, and in a long message format, the parameters could identify a location at which the actual parameters can be found. In response to a client request message as shown in Figure 10a, a client response message as shown in Figure 10b will be returned, the client response message including the sender ID (SID), the recipient ID (RID) and the results (RESULTS) giving the data requested by the PARAMETERS.

The present embodiment employs not only commands as illustrated in Figure 10, but also the dummy windows 108/106 for the transfer of information between the client application(s) 86 and the window manager 88. A dummy window is represented in Figure 11. Data to be passed are held as properties 114 of the dummy window 108/106. The properties are attached to the window and are identified by an "atom" using the terminology of X. The atom 112 is a name forming a pointer to the properties 114.

In the following, various examples of the operation of the information query module 100, the command request module 112 and the event forwarding module 104 will be given. The explanation will indicate the flow of information between a client application (CA) 86 and the window manager (WM) 88. It should be appreciated that the examples given are merely by way of specific example in the context of an X environment, and that details may be different in other embodiments of the invention.

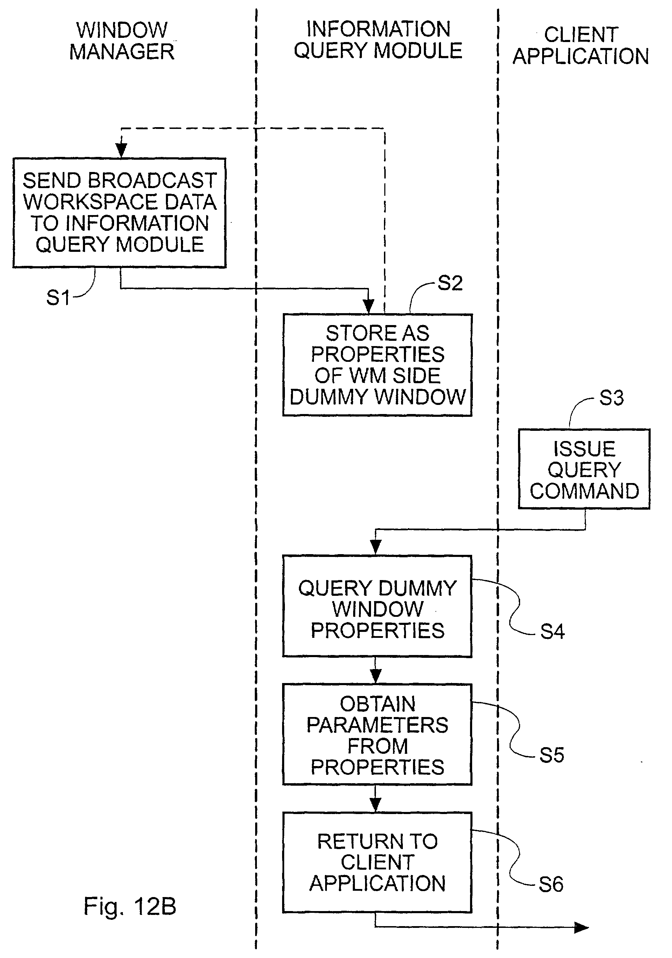

Figures 12A and 12B are a schematic block diagram and a flow diagram, respectively, illustrating the operation of the information query module 100.

In step S1, the window manager 88 is operable to send workspace and/or any other data that is to be broadcast to applications to the information query module which in turn forwards that data to a dummy window 108. This data is stored in step S2 as properties 115 identified by an atom of the dummy window 108 that forms a workspace information repository associated with the window manager 88 by being accessible thereto via the information query module. These steps S 1 and S2 are performed when a change is made to the data to be held as properties 115 of the dummy window 108. Although it is indicated that the properties 115 will be updated when there are changes to the relevant data, the data which are made available by this broadcast method is in principle data which does not change rapidly. An example of the data that can be stored as the parameters 115 could include:
workspace information attributes including the background colour, the foreground colour, a name of an image used for the background, information about that image, names of the workspaces, a list of the windows within the workspaces; and
screen information including the number of screens.

This could be arranged as a data structure with the screen information at the highest level with, for each screen, a list of workspaces for each screen and, for each workspace, the workspace attributes concerned.

During operation, a client application 86 is operable to issue a command S3 to the information query module which is operable in step S4 to query the properties 115 of the window 108, and to obtain those parameters in step S5 to be passed back at S6 to the client application 86.

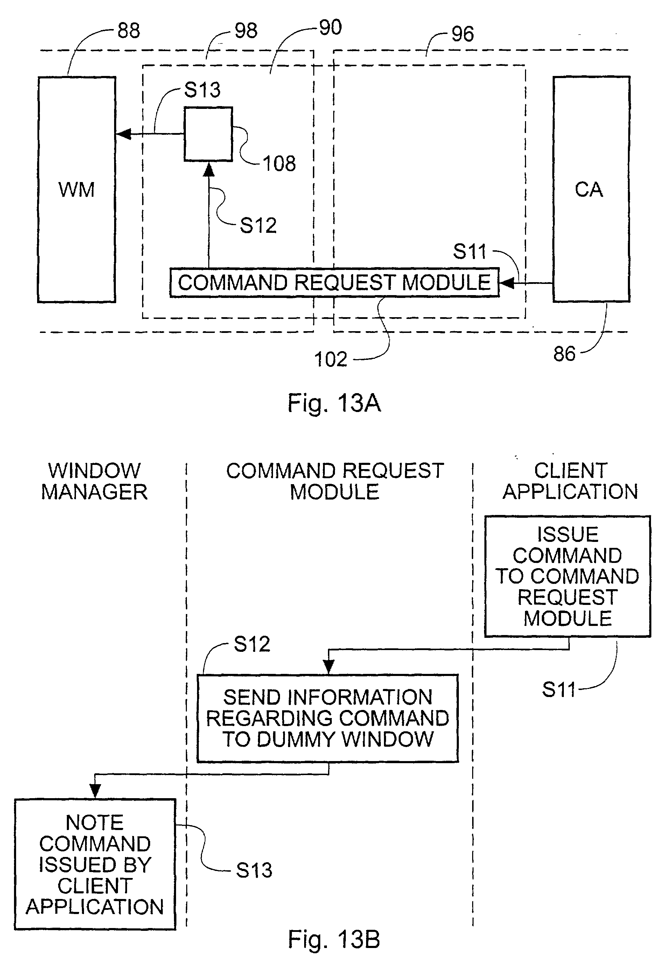

Figures 13-15 illustrate various modes of operation of the command request module 102.

Figures 13A and 13B are a schematic block diagram and a flow diagram, respectively, illustrating a first operation mode of the command request module. In this mode a command is issued by a client application 86 to cause the window manager 88 to make a change to the displayed windows in accordance with the command issued by the client application 86. As illustrated in Figures 13A and 13B, a command is issued in step S11 to the command request module 102. The command issued in step S11 identifies the operation that needs to be performed by the window manager 88. This could for example, be a command to kill a particular window supported by the client application 86. In step S12, the command request module causes information regarding the command to be sent to the dummy window 108, which forms a command repository associated with the window manager 88.

The window manager 88 will be responsive to the event of step S12 occurring on the dummy window 108 as a result of the conventional event handling characteristics of the X environment. Accordingly, the window manager will, through the use of the dummy window 108, be able to be made aware at S13 of the command issued by the client application 86. It can be seen, therefore, that the API in this environment provides a structure whereby commands can be supplied from a client application 86 to the window manager 88.

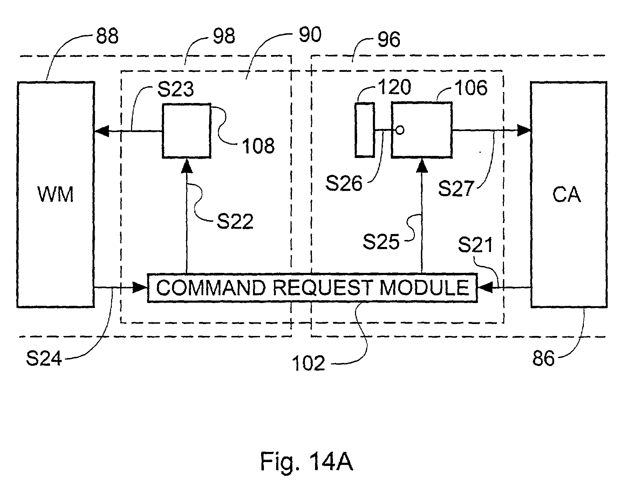

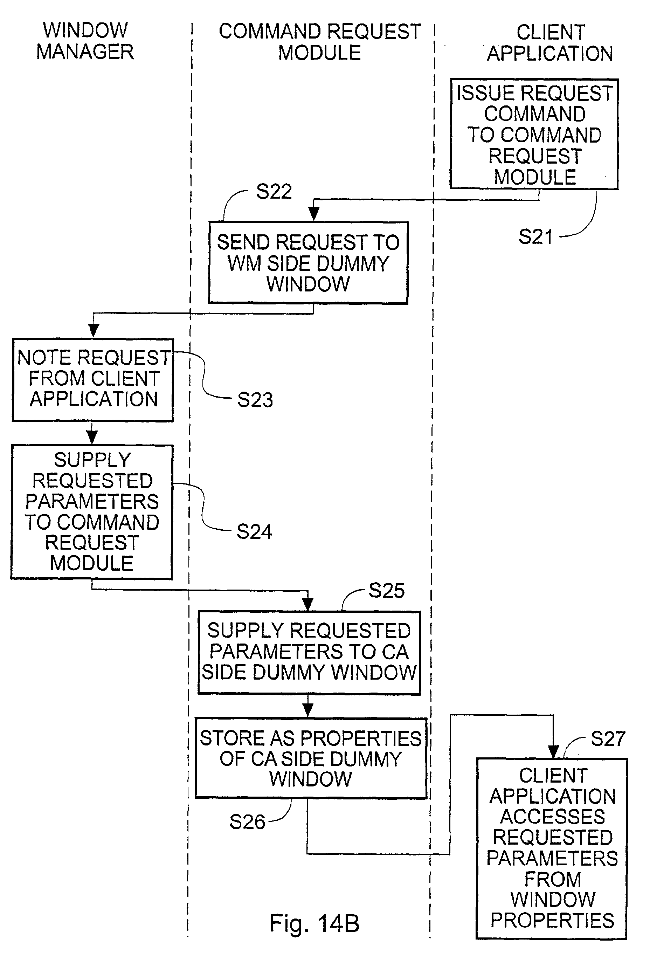

Figures 14A and 14B are a schematic block diagram and a flow diagram, respectively, illustrating a further example of operation of the command request module 102. In this mode the client application 86 can request information internal to the operation of the window manager 88. An example of such information is window layout information.

In this example, it is assumed that only a very small number of different items of data are required by the client application 86 whereby the parameters for those items of information can be contained within a single command. As shown in Figures 14A and 14B, in step S21, a request command is issued to the command request module 102. The command request module causes the request to be sent in step S22 to the dummy window 108 on the WM side 98 of the API 90, which dummy window forms a request repository associated with the window manger 88. The information from the message sent in step S21 is then available in step S23 to the workspace manager as a result of the event handling structures of the X environment. The workspace manager 88 is then operable to supply the requested parameters in step S24 to the command request module, the requested parameters then being supplied in step S25 to the CA side dummy window 106 and stored in step S26 as properties 120. These properties thus form a response repository associated with the client application 86. The client application 86 is then notified in step S27 that the requested data are available from the properties 120 as a result of the conventional event handling processes of the X environment. It can be seen that this operation of the command request module 102 enables the client application to request and receive information internal to the workspace manager through the use of the client messages and the properties 120 of the dummy window 106 providing a repository for the data to be transferred.

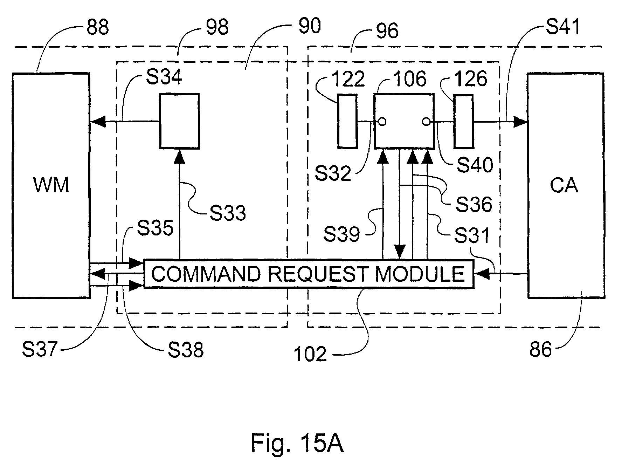

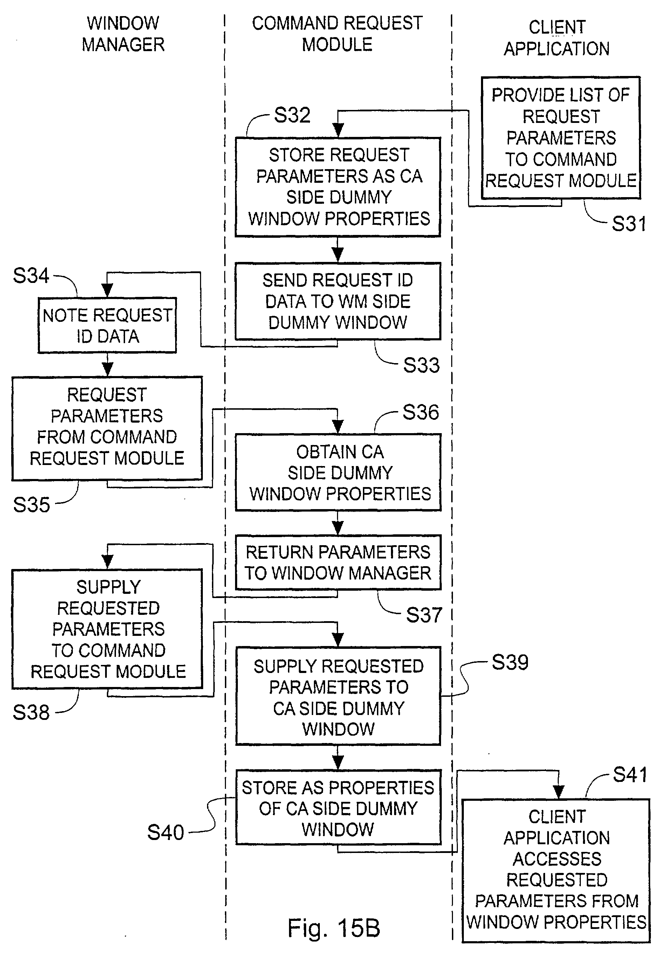

Figures 15A and 15B are a schematic block diagram and a flow diagram, respectively, illustrating essentially the same process as shown in Figures 14A and 14B, except that in this case, it is assumed that more data is requested that can be requested in a single client message. Accordingly, in this example, in step S31, the client application sends to the command request module 102 a list of request parameters for which it requires data. These request parameters are being forwarded by the command request module 102 to the CA side window 106 where they are stored these in step S32 as properties 122 of the CA side window 106 identified by a particular atom A1. These properties thus form a data request repository associated with the client application 86. In step S33, the command request module generates a command identifying the atom A1 used for storage of the request parameters and also the identity of an atom A2 with which the data for the request parameters is to be associated. The command request module 102 thus causes data identifying the atom A1 to be provided to the WM side dummy window 108 in step S33. The identification of the atom A1 is then available in step S34 to the window manager 88 as a result of conventional X event handling.

The window manager 88 is then operable in step S35 to request, via the command request module 102, the request parameters stored in step S32. The command request module is then operable to obtain in step 36 the request parameters stored as properties 122 associated with the atom A1. This information is then returned in step S37 by the command request module to the window manager 88. The window manager 88 is then operable in step S38 to provide the requested data to the command request module 102. The command request module then passes the requested data in step S39 for storage in step S40 as further properties 126 of the CA side dummy window 106 associated with a second atom A2. The data provided in the properties 126 is then available in step S41 to the client application 86 by way of X event handling procedures. It can be seen, therefore, that the arrangement of Figure 15 enables multiple sets of parameters to be requested in a single command from the client application 86.

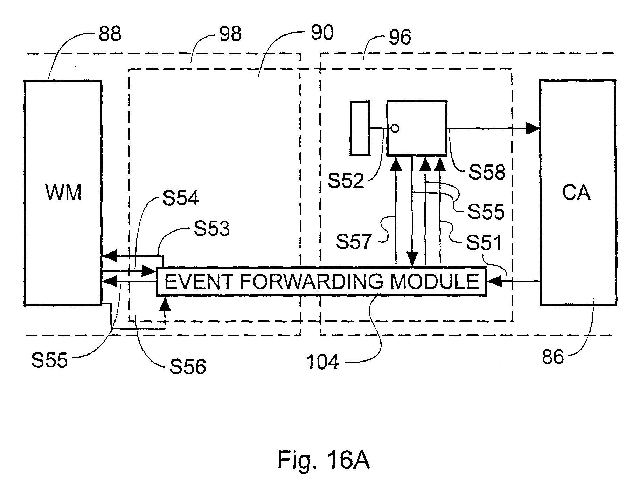

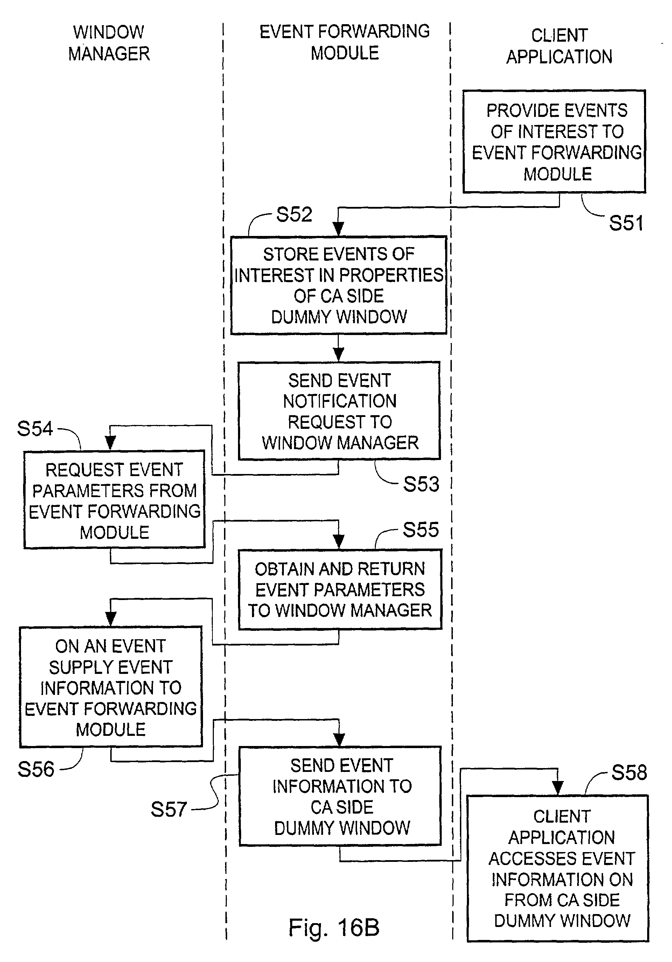

Figures 16A and 16B are a schematic block diagram and a flow diagram, respectively, illustrating an example of operation of the event forwarding module 104. As shown in Figures 16A and 16B the client application is operable in step S51 to identify to the event forwarding module event parameters representative of events in which the client application 86 is interested. The event forwarding module 104 stores these event parameters in step S52 as properties 128 of a CA side dummy window 106. These properties thus form an event request repository associated with the client application 86 via the event forwarding module. In step S53 the event forwarding module sends an event notification request to the window manager 88 to tell the window manager to read the event(s) that is/are of interest to the application.

The window manager 88 registers the client for the event(s) stored in properties 128. In step S54, the window manager requests those parameters from the event forwarding module 104. In step S55 the event forwarding module 104 retrieves the event parameters form the CA side dummy window properties and then returns them in step S56 to the window manager 888, where they are cached.

Then, when an event occurs in the window manager 88, the window manager checks if any client has registered interest in the event. If so, it can send a message including information about the event to the event forwarding module 104 in step S56, which then forwards this information in step S57 to the dummy window 106 of the client application 86. The event forwarding module 104 is notified of the message by standard X event handling procedures. The information about the event that has occurred is then available in step S58 to the client application 86, whereby the client application receives automatic notification of a predetermined event having occurred. It can be seen that the API 90 provides a mechanism whereby the client application 86 can be made aware of events under the control of the window manager 88 as they occur, something which was not possible prior to the invention.

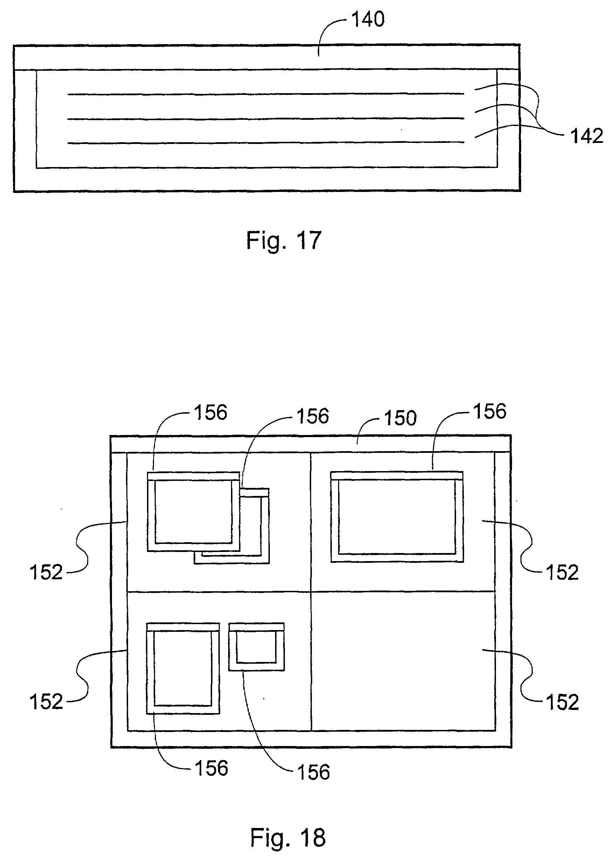

Figures 17 and 18 are two examples of applications that can make use of an API in accordance with the present invention.

Figure 17 represents a window 140 associated with a window list application. The window list application is operable to list all displayed windows, and parameters relating to those windows. Accordingly, a client application 86 in the form of a window list is operable to use the API described above to obtain current information about the individual windows displayed and, thereby, to generate a window of its own 140 for displaying that information.

Figure 18 represents a window for a graphical workspace manager, which graphical workspace manager is able to display thumbnail representations of the various workspaces supported at any time. The thumbnail representations of the workspaces can include representations of the windows shown within those workspaces.

The advantage of a graphical workspace manager having a window such as the window 150 illustrated in Figure 18 is that it enables the user to see what is displayed in each of the workspaces, and not just the workspace currently selected for display. Thus, each of the workspaces 152 is represented in a separate area of the window 150 and within each workspace 152, individual windows 156 are also represented.

The graphical workspace manager can be merely passive, displaying the information in the various workspaces. Alternatively, it could also be active, whereby conventional cursor operations of identifying a particular window and moving that window and/or resizing the window within a workspace can be effected by conventional click and drag operations. Even operations for moving a window from one workspace to another can be performed by conventional click and drag operations. The graphical workspace manager can cause the operations (assuming that they are permissible within the layout rules of the workspace manager) to be effected for the actual windows within the actual workspaces to be manipulated through an exchange of commands and information using the structures illustrated in the preceding Figures.

Thus, for example, the command request module can provide commands to the workspace manager identifying a move, resize, kill, etc., operation identified within the window 150 of the graphical workspace manager by conventional pointer device operations. At the same time, data recording the actual layout of the workspaces can be reported to the graphical workspace manager forming the client application 86 by means of an event forwarding mechanism as shown in Figure 16.

It can be seen, therefore, that an embodiment of the invention greatly enhances the interaction of client applications (for example a window list or a graphical workspace manager application) to interact with the window manager and therefore to provide better interaction with the operation of the workspace manager.

In a particular example of the invention, the interface forming the API can be configured as a computer program element including computer program code. Each of the component modules of the API, namely the information query module, the command request module and the event forwarding module can also be configured as respective program elements including computer program code. The program element(s) could be provided as a part of graphical subsystem including the program element(s) and at least one other program element such as, for example, the window manager. Individual ones of the program element or elements, and/or the graphical subsystem as a whole, could be provided a program code on a carrier medium. The carrier medium could, for example, be a transmission medium such as a telephone line, a carrier wave, etc, or a storage medium such as a solid state memory, a disk, tape, etc.

Although particular embodiments of the invention have been described, it will be appreciated that many modifications/additions and/or substitutions may be made within the scope of the invention as defined in the appended claims.

For example, and as indicated above, although an embodiment of the invention has been described in the context of an X environment, the present application is applicable to any windowing environment that uses a window manager that provides window management functions in response to the operation of a window server or other mechanism for providing commands relating to the display of windows.

## Claims

1. An interface operable to permit direct access between an application and a window manager, the window manager being responsible for controlling window layout within at least one workspace in accordance with predefined rules, the interface being operable to provide at least one control module for controlling communication between the application and the window manager and at least one repository of data to be communicated between application and the window manager.

2. The interface of claim 1, operable to provide a workspace information repository associated with the window manager, the workspace information repository being operable to hold workspace content information to be communicated from the window manager to at least one application, and a query control module responsive to a request from an application for information regarding the content of a workspace to query the workspace information repository for workspace content information to be returned to the application.

3. The interface of claim 1 or claim 2, operable to provide a command request control module responsive to a request from an application for information internal to the window manager to cause the window manager to return the internal information to the application.

4. The interface of claim 3, wherein the command request control module is responsive to a command message from an application to place information representative of a command in a command repository associated with the window manager.

5. The interface of claim 3 or claim 4, wherein the command request control module is responsive to a request message requesting data internal to the window manager to place information representative of the request in a request repository associated with the window manager.

6. The interface of claim 4, further operable to provide a data request repository associated with an application, the data request repository being operable to hold an identification of the internal data requested, the request message identifying the location of the data request repository.

7. The interface of any of claims 3 to 6, further operable to provide a response repository associated with an application, the response repository being operable to receive requested items supplied by the window manager in response to a request message.

8. The interface of claim 7, wherein the request message identifies the location of the response repository.

9. The interface of any preceding claim, further operable to provide an event notification repository associated with an application, the event notification repository being operable to receive a notification of an event from the window manager, and an event control module for passing event notification requests between an application and the window manager.

10. The interface of claim 9, further operable to provide an event request repository associated with the application for receiving an identification of events requested by the application.

11. The interface of claim 10, wherein the window manager is operable to poll the event request repository to identify event notifications requested by an application.

12. The interface of any preceding claim, wherein at least one repository is configured as a dummy window.

13. The interface of any preceding claim, wherein a repository is formed by properties of a dummy window.

14. The interface of any preceding claim, wherein one dummy window is provided that is associated with the window manager and one dummy window is provided that is associated with an application.

15. An interface program element comprising program code forming the interface of any preceding claim.

16. The interface program element of claim 15 on a carrier medium.

17. A graphical subsystem for displaying a window for at least one application, the graphical subsystem comprising a window manager operable to control window layout within at least one workspace in accordance with predefined rules and the interface of any one of claims 1 to 14.

18. A graphical subsystem program element comprising program code forming the graphical subsystem of claim 17.

19. A computer system comprising a processor, memory, at least one display and a graphical subsystem according to claim 17.

20. The computer system of claim 19, wherein the graphical subsystem comprises program code held in the memory and operable to control the processor.

21. A method of providing direct access between an application and a window manager, which window manager is responsible for controlling window layout within at least one workspace in accordance with predefined rules, the method comprising controlling communication between the application and the window manager by means of an interface and holding data transferred in communication between the application and window manager in a repository of data in the interface.

22. The method of claim 21, wherein a workspace information repository is associated with the window manager, the workspace information repository being operable to hold workspace content information to be communicated from the window manager to at least one application, the method comprising the interface responding to a request from an application for information regarding the content of a workspace to query the workspace information repository for workspace content information to be returned to the application.

23. The method of claim 21 or claim 22, comprising the interface responding to a request from an application for information internal to the window manager to cause the window manager to return the internal information to the application.

24. The method of claim 23, comprising the interface placing information representative of a command in a command message from the application in a command repository associated with the window manager.

25. The method of claim 23 or claim 24, comprising the interface responding to a request message requesting data internal to the window manager to place information representative of the request in a request repository associated with the window manager.

26. The method of claim 24, wherein the request message identifies the location of a data request repository associated with an application, the data request repository being operable to hold an identification of the internal data requested.

27. The method of any of claims 23 to 26, wherein requested items supplied by the window manager in response to a request message are received by a response repository associated with an application.

28. The method of claim 27, wherein the request message identifies the location of the response repository.

29. The method of any of claims 21 to 28, wherein a notification of an event is received in an event notification repository associated with an application.

30. The method of claim 29, wherein an identification of events requested by application held in an event request repository associated with the application.

31. The method of any of claims 29 to 30, wherein the window manager polls the event request repository to identify event notifications requested by an application.

32. The method of any of claims 21 to 31, wherein at least one repository is configured as a dummy window

33. The method of any of claims 21 to 32, wherein at least one repository is formed by properties of a dummy window.

34. The method of any of claims 21 to 33, wherein one dummy window is provided that is associated with the window manager and one dummy window is provided that is associated with an application.
